# EUROPEAN PATENT SPECIFICATION

(11) **EP 2 546 904 B1**
(45) Date of publication and mention of the grant of the patent: **02.10.2013**
(21) Application number: 11005802.1
(22) Date of filing: 15.07.2011
(51) Int. Cl.: H01M 2/10, H01M 10/42, H01M 10/50, H01M 2/12

(54) **Heat exchanging unit**
Wärmetauscheinheit
Unité d'échange de chaleur

(43) Date of publication of application: 16.01.2013
(73) Proprietor: Autoliv Development AB, 44783 Vårgårda (SE)
(72) Inventor: Sturk, David, 44783 Vårgårda (SE)
(74) Representative: Müller Verweyen

(56) References cited:
- EP-A1- 2 216 843
- WO-A1-00/11730
- WO-A1-2011/035992
- US-A- 5 585 204
- US-A1- 2010 136 391

## Description

The invention relates to a heat exchanging unit for a battery module in a vehicle and an arrangement of a heat exchanging unit in a vehicle.

Vehicles that use electricity for their motive power, whether only partly like hybrid electric vehicles, or exclusively like full electric vehicles, receive their energy from one or more batteries or battery modules. These batteries or battery modules can be positioned at numerous places inside the vehicle.

Battery modules contain electrochemical cells, which provide the electric energy through a chemical reaction. Known electrochemical cells are lithium-ion cells, nickel-metal-hydride cells, lithium polymer cells and others. To provide a cooling mechanism, the battery module can comprise a heat exchanging unit or other thermal management features. An example of such a battery module is described in the International Patent Application WO 2011/047067 A2. Here a heat exchanging unit using a cooling fluid extends substantially along the length of the battery module in a vehicle.

Battery modules are designed to store big quantities of energy. Therefore problems may arise if cooling means fail or the battery module gets damaged, for example when the vehicle collides with an object. In a worst case scenario energy and or chemicals are released in an uncontrolled high-temperature reaction, for example a fire.

Therefore it is the objective of the invention to provide means to better protect the battery module.

The closest prior art is represented by WO 2011/035992.

The invention is defined in claim 1.

The invention solves this objective with the features of the independent claims. A heat exchanging unit for a battery module in a vehicle is provided, the heat exchanging unit being in contact with the battery module at a heat exchanging surface, the battery module comprising one or more battery packs with a plurality of electrochemical cells, the heat exchanging unit comprising a channel structure with a channel orientation, in which a cooling fluid can pass through the channel structure, wherein the channel orientation in at least some areas of the channel structure is directed towards the heat exchanging surface. Furthermore, the heat exchanging unit preferably comprises at least one vent element in or on the heat exchanging surface, which is designed to be able to open and thus allowing a flow of the liquid cooling fluid from the heat exchanging unit into the battery module, wherein the vent element is designed as a membrane that burst and opens in case of a pressure increase inside the heat exchanging unit. The vent element can also be part of the battery unit, in particular part of the electrochemical cell wall. The vent element can be a vent membrane or any other venting mechanism. It is designed to be able to open and thus allowing a flow of cooling fluid from the heat exchanging unit into the battery module. If the vent element opens and the cooling fluid flows into the battery module, it reduces or stops potentially dangerous chemical reactions inside the electrochemical cells and protects the battery module from overheating. To further increase this battery protection, the cooling fluid preferably comprises additives capable of impeding undesired chemical reactions which plausibly could occur in the event of battery failure. Therefore the venting mechanism further enhances protective qualities of the heat exchanging unit, reducing in particular the danger of toxicity, fire and explosion damage.

Under regular circumstances the vent element does not open. The vent element preferably opens in case of a collision. In such a case of a collision and/or accident, the vent element opens to prevent any damage to the battery module, which may otherwise lead to an uncontrolled fire or discharge of the battery. One preferred way to achieve the controlled opening of the vent element is to design it in such a way, that it opens in case of a pressure increase inside the heat exchanging unit. The vent element is preferably designed as a vent membrane that is only able to withstand a certain maximum pressure and therefore opens if the pressure inside the heat exchanging unit exceeds that pressure.

To orientate the channel structure towards the heat exchanging surface can help to increase the cooling effect of the cooling fluid and furthermore increases the protection effect of the channel structure and therefore the protection effect of the whole heat exchanging unit.

This increased protection is mostly due to the high energy absorption capabilities of the specially orientated channel structure. In case of a collision, the heat exchanging unit is protecting the battery module through an energy absorbing deformation of the channel structure. The heat exchanging unit, and in particular the channel structure, acts as an energy absorbing battery protection unit. It is designed both for thermal energy absorption and for kinetic energy absorption.

One preferred way to ensure this energy absorption is to choose certain designs and/or certain materials for the channel structure, preferable those that lead to a controlled deformation behavior. One preferred example is to provide a channel structure in regard to the battery module's characteristics. The yield strength of the channel structure is preferably lower than the yield strength of the battery module. This way the channel structure will yield first and deforms before the battery module yields and/or takes any damage. The channel structure absorbs the energy and helps to protect the structural integrity of the battery module.

The channel orientation is preferably substantially perpendicular to the heat exchanging surface. This orientation is beneficial for the energy absorption capacities of the channel structure in several collision scenarios, mainly because the deformation in the likely collision scenarios is also mostly in direction of the heat exchanging surface and therefore coincides with the channel orientation. The channel structure usually absorbs the most energy when it is compressed in direction of its channel orientation and the least energy when compressed in a direction perpendicular to the channel orientation. One of the most preferred channel structures is a honeycomb structure, further preferred an aluminum honeycomb structure. An aluminum honeycomb structure has great heat exchanging qualities as well as great energy absorbing characteristics.

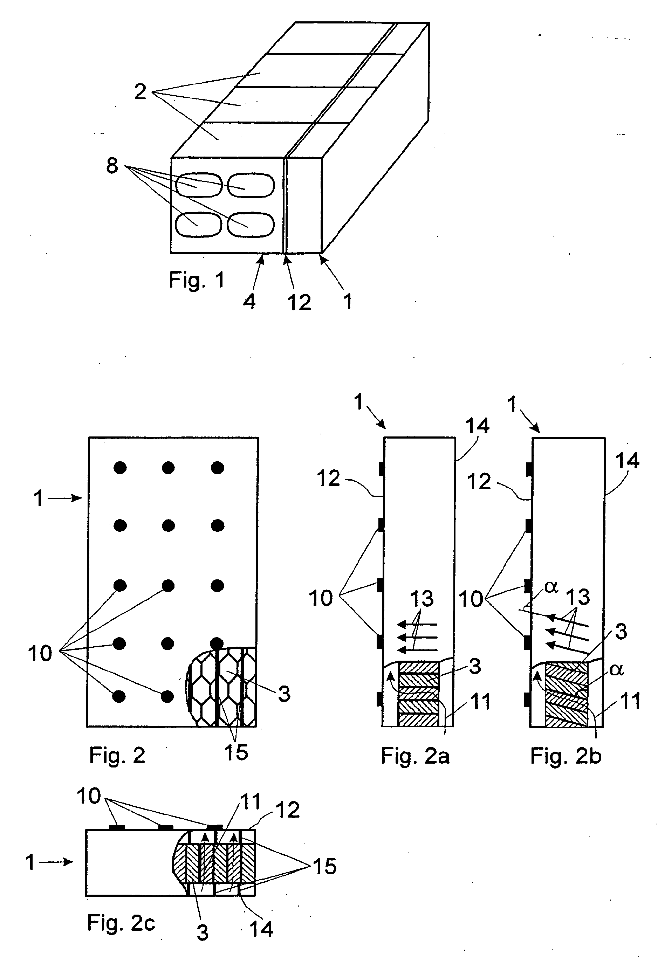

It can also be advantageous, if the channel orientation has an angle α between 60 and 90 degrees towards the heat exchanging surface. This orientation still allows for good energy absorption through deformation while positively influencing the flow behavior of the cooling fluid. The flow of the cooling fluid follows more even turns with the preferred channel orientation (as will be described more detailed later with the help of figure 2b), therefore less energy is needed to pump the fluid through the heat exchanging unit.

The heat exchanging unit preferably comprises metal fixtures between the heat exchanging surface and the channel structure, which are aligned substantially along the length of the heat exchanging unit. The metal fixtures provide a thermal bridge between the heat exchanging surface and the channel structure. The alignment along the length of the heat exchanging unit provides a good flow behavior of the cooling fluid.

The invention also provides an arrangement of a heat exchanging unit in a vehicle, with a heat exchanging unit as previously described, wherein the heat exchanging unit is located on that side of the battery module, on which the most energy is absorbed during an estimated collision or impact. The heat exchanging unit is preferably facing the collision or impact, since this way it can directly protect the battery module. In the example of a car, heat exchanging units could be positioned on the left and right side of the car, for example below the doors, the battery module between them in the underbody of the car. This positioning is beneficial for protection against impacts from the side of the car. It is also possible to position the heat exchanging unit at the front, the back or on the bottom of the car, to shield the battery module from any impact from the front, back or bottom of the car. Therefore the heat exchanging unit is preferably positioned between the battery module and the impact. Preferably the heat exchanging unit is located in the floor of the vehicle. This way the heat exchanging unit offers protection underneath the vehicle.

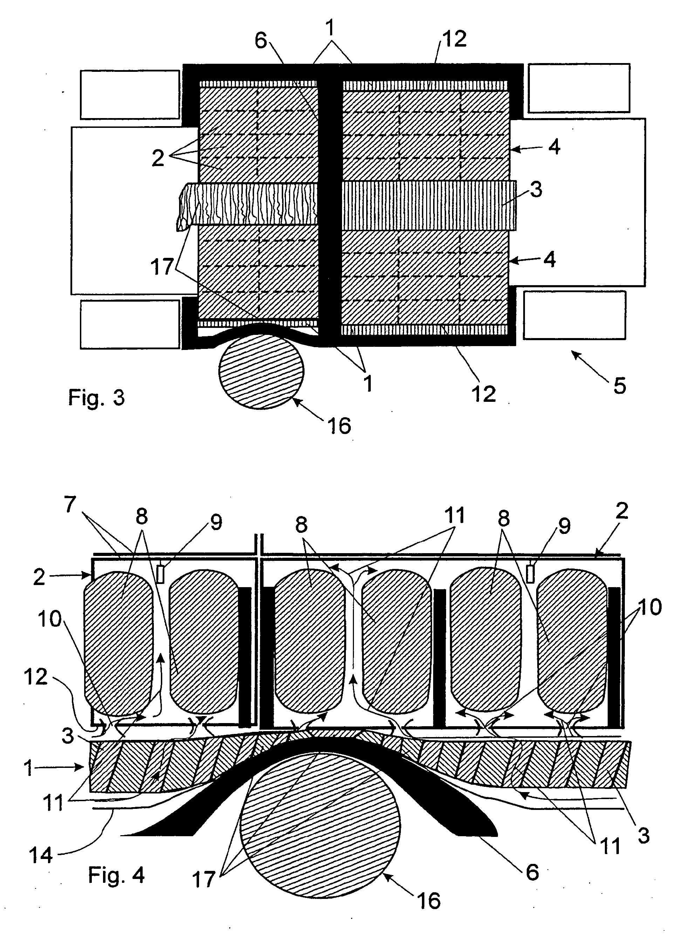

The heat exchanging unit can also be preferably located between two battery modules. Even if it is not intended to let cooling fluid flow through the heat exchanging unit between these two battery modules, its energy absorbing characteristics may help to protect the battery modules from damage, as will thoroughly be described below, with the help of figure 3.

In the following the invention shall be illustrated on the basis of preferred embodiments with reference to the accompanying drawings, wherein:
- Fig. 1: shows isometric view of a battery module with an adjacent heat exchanging unit;
- Fig. 2: shows a heat exchanging unit from a top view;
- Fig. 2a: shows a heat exchanging unit from a side view;
- Fig. 2b: shows an alternative design of a heat exchanging unit from a side view;
- Fig. 2c: shows a heat exchanging unit from a front view;
- Fig. 3: shows a vehicle with battery modules and heat exchanging units that collides with an object;
- Fig. 4: shows a detailed view of the collision behavior of the heat exchanging unit.

Figure 1 shows several battery packs 2, which each contain electrochemical cells 8 and which are part of a battery module 4. The battery module 4 can be used in vehicles 5, for example in cars or motor cycles. The battery modules in a vehicle can weigh 200 to 300 kg or more and store a big amount of energy. During use, the battery module may heat up and need cooling. On one side of the battery module 4 a heat exchanging unit 1 is attached. Between the battery module 4 and the heat exchanging unit 1, a heat exchanging surface 12 is defined. At the heat exchanging surface 12 thermal energy of the warm or hot battery pack is absorbed by the heat exchanging unit 1.

The process of the thermal energy absorption of the heat exchanging unit 1 will now be described in more detail by usage of the figures 2, 2a, 2b and 2c. In these figures the heat exchanging unit 1 can be seen in a top view (figure 2), a side view (figure 2a) and a front view (figure 2c). Figure 2b shows a side view of a preferred alternative design of the channel structure 3.

A cooling fluid 11 is flowing through the heat exchanging unit 1. While flowing through the heat exchanging unit 1 it absorbs thermal energy and thus its temperature rises. The thermal energy is absorbed by direct contact of the cooling fluid 11 with the heat exchanging surface 12. A bigger part of thermal energy is absorbed while the cooling fluid 11 is flowing through a channel structure 3 inside the heat exchanging unit 1. The channel structure 3 in this preferred embodiment is an aluminum honeycomb structure. This channel structure 3 is connected to the heat exchanging surface 12 via metal fixtures 15, which serve as heat bridges to transport the thermal energy from the heat exchanging surface 12 to the channel structure 3. After this heat conduction from the heat exchanging surface 12 to the channel structure 3, the heat is transferred to the cooling fluid 11 by convection inside the channels.

The flow direction of the cooling fluid 11 inside the channel structure 3 is defined by the channel orientation 13. In one preferred embodiment, illustrated in figure 2a, the channel orientation 13 is perpendicular to the heat exchanging surface 12. This way the cooling fluid 11 flows directly towards and in direction of the heat exchanging surface 12. It can also be advantageous to slightly elevate the channel orientation 13. The angle α towards the heat exchanging surface can be seen in figure 2b. The flow of the cooling fluid 11 flows more smoothly through the heat exchanging unit 1, if the angle α is preferably between 60 and 90 degrees. In case of a perpendicular channel orientation 13 (figure 2a) the angle α is 90 degrees.

The main difference to known heat exchanging features, for example to those described in the International Patent Application WO 2011/047067 A2, lies within the fact that the channel orientation 13 is entirely different. The known channel structures have a channel orientation that is exclusively parallel to the heat exchanging surface (the angle α having exactly zero degrees), whereas the proposed heat exchanging unit 1 suggests to have at least some areas of the channel structure 3 directed directly towards the heat exchanging surface 12. Therefore the angle α is preferably bigger than zero degrees. Further preferred is an angle α larger than 30 degrees.

The heat exchanging unit 1 comprises several vent elements 10 in or on the heat exchanging surface 12. The purpose and function will be described later with usage of the figure 4.

The figure 3 shows a vehicle 5, for example an electric car, which has several battery modules 4 positioned in its underbody. The battery modules 4 comprise several battery packs 2 each having one heat exchanging unit 1 adjacent to it. Another channel structure 3 is positioned between two battery modules 4. This channel structure 3 can also be part of a heat exchanging unit 1, in case more cooling is needed, but it can also be used only for its good deformation behavior with no cooling fluid 11 flowing though it.

The vehicle 5 in the figure 3 is colliding with a collision object 16. The collision object 16 could be an immovable object or another vehicle, or even a person. The impact of the collision object 16 leads to a deformation of some part of the vehicle 5 such as on the vehicle side like figure 3, but may also e.g. be under the vehicle 5. The vehicle frame 6 is deformed and also the heat exchanging unit 1 at this position is compressed in some areas. Most of the kinetic energy is absorbed by the channel structure 3, its deformed state illustrated as deformed channel structure 17. The channel structure 3 is protecting the battery module 4 by absorbing not only thermal energy for cooling matters but also kinetic energy in case of a collision. Since the deformation allows for a large absorption of kinetic energy, the battery module 4 is only moved slightly inwards not damaged or deformed critically. One way to achieve this deformation behavior is to design the channel structure 3 with a total yield strength lower than the total yield strength of the battery module 4.

The battery can move into the channel structure 3 as shown in figure 3, if the heat exchanging unit 1 has been compressed to its bottom state.

The figure 4 shows a more detailed view of the impact area, while also demonstrating a fire mitigation aspect. In this figure the electrochemical cells 8 inside the battery pack 2 can be seen. Sensor units 9 inside the battery pack may be used to detect any change in temperature, voltage or even certain chemical and/or gas buildups.

The collision deformed the heat exchanging unit 1, which is located between the collision object 16 and the battery packs 2. The collision deformed the vehicle frame 6, the outer wall 14 of the heat exchanging unit 1, as well as the channel structure 3 inside the heat exchanging unit 1. The deformed channel structure 17 absorbs the kinetic energy of the impact. If the deformation is very large, for example in case of a big car accident, a shut down of any activity inside the battery packs 2 for safety reasons is advantageous. This precaution can be automatically achieved by usage of the vent elements 10. The vent elements 10 can be designed as vent membranes that burst and open in case the pressure inside the heat exchanging unit 1 builds up. In figure 4 is illustrated how an opening of the vent elements 10 leads to a flow of cooling fluid 11 inside the battery packs 2. Thus the electrochemical cells 8 can be cooled directly and by adding additives to the cooling fluid 11, the danger of a fire and other hazardous reactions can be excluded. Alternatively a signal could be used to open the vent elements 10, preferably a signal that is used to activate other safety measures inside the vehicle 5.

Alternatively a signal could activate the gas generator to pressurize and open the vent elements 10.

Advantageously, the cooling effect is enhanced by vaporizing the cooling fluid 11 when entering the compartment of the electrochemical cells 8. This can be achieved by using a cooling fluid 11 which is in a liquid state while flowing in the pressurized heat exchanging unit 1, but vaporizes when exposed to the lower pressure in the compartment of the electrochemical cells 8.

Furthermore it can be advantageous to use a cooling fluid 11 that vaporizes when it gets in contact with the hot surface of the electrochemical cells 8. The surface of the electrochemical cells 8 is considered hot, when its temperature exceeds the regular working temperature of the electrochemical cells 8. This raise of surface temperature can likely be the result of battery and/or cooling failure and may consequently be used to trigger safety measures. A vaporization of the cooling fluid 11 consumes thermal energy and therefore leads to a drop in the overall temperature inside the battery pack 2. The vaporization temperature of the cooling fluid is therefore preferably higher than the working temperature of the electrochemical cells 8 or the heat exchanging unit 1. Preferably the vaporization temperature of the cooling fluid is higher than 90°C, further preferred 120°C, for example higher than 150°C.

### Reference list:

- 1: heat exchanging unit
- 2: battery pack
- 3: channel structure
- 4: battery module
- 5: vehicle
- 6: vehicle frame
- 7: cell wall
- 8: electrochemical cells
- 9: sensor unit
- 10: vent element
- 11: cooling fluid
- 12: heat exchanging surface
- 13: channel orientation
- 14: outer wall
- 15: metal fixtures
- 16: collision object
- 17: deformed channel structure

## Claims

1. A heat exchanging unit (1) for a battery module (4) in a vehicle (5), the heat exchanging unit (1) being in contact with the battery module (4) at a heat exchanging surface (12), the battery module (4) comprising one or more battery packs (2) with a plurality of electrochemical cells (8), the heat exchanging unit (1) comprising a channel structure (3) with a channel orientation (13), in which a cooling fluid (11) can pass through the channel structure (3), wherein the channel orientation (13) in at least some areas of the channel structure (3) is directed towards the heat exchanging surface (12), wherein the cooling fluid (11) is liquid, **characterized in that** the heat exchanging unit (1) comprises at least one vent element (10) in or on the heat exchanging surface (12) which is designed to be able to open and thus allowing a flow of the liquid cooling fluid (11) from the heat exchanging unit (1) into the battery module (4), wherein the vent element (10) is designed as a membrane that burst and opens in case of a pressure increase inside the heat exchanging unit (1).

2. The heat exchanging unit (1) of claim 1, wherein in case of a collision, the heat exchanging unit (1) protects the battery module (4) through an energy absorbing deformation of the channel structure (3).

3. The heat exchanging unit (1) of claim 1 or claim 2, wherein the yield strength of the channel structure (3) is lower than the yield strength of the battery module (4).

4. The heat exchanging unit (1) as claimed in any of the preceding claims, wherein the vent element (10) can be opened by a signal.

5. The heat exchanging unit (1) as claimed in any of the preceding claims, wherein the channel orientation (13) is substantially perpendicular to the heat exchanging surface (12).

6. The heat exchanging unit (1) as claimed in any of the preceding claims, wherein the channel orientation (13) has an angle α between 60 and 90 degrees towards the heat exchanging surface (12).

7. The heat exchanging unit (1) as claimed in any of the preceding claims, wherein the channel structure (3) comprises a honeycomb structure.

8. The heat exchanging unit (1) as claimed in any of the preceding claims, wherein the heat exchanging unit (1) comprises metal fixtures (15) between the heat exchanging surface (12) and the channel structure (3), which are aligned substantially along the length of the heat exchanging unit (1).

9. The heat exchanging unit (1) as claimed in any of the preceding claims, wherein the cooling fluid (11) comprises additives capable of impeding undesired chemical reactions.

10. The heat exchanging unit (1) as claimed in any of the preceding claims, wherein the vent element (10) opens in case of a collision.

11. The heat exchanging unit (1) as claimed in any of the preceding claims, wherein the heat exchanging unit (1) is located between two battery modules (4).

12. Arrangement of a heat exchanging unit (1) in a vehicle (5), as described in any of the preceding claims, wherein the heat exchanging unit (1) is located on that side of the battery module (4), on which the most energy is absorbed during an estimated collision or impact.

13. Arrangement of a heat exchanging unit (1) of claim 12, wherein the heat exchanging unit (1) is located in the floor of the vehicle (5).

## Patentansprüche

1. Wärmetauscheinheit (1) für ein Batteriemodul (4) in einem Fahrzeug (5), wobei die Wärmetauscheinheit (1) das Batteriemodul (4) an einer Wärmetauschfläche (12) berührt, das Batteriemodul (4) ein oder mehrere Akkupacks (2) mit einer Vielzahl elektrochemischer Elemente (8) umfasst, die Wärmetauscheinheit (1) eine Kanalstruktur (3) mit einer Kanalausrichtung (13) umfasst, in der ein Kühlfluid (11) durch die Kanalstruktur (3) strömen kann, wobei die Kanalausrichtung (13) in zumindest einigen Bereichen der Kanalstruktur (3) auf die Wärmetauschfläche (12) gerichtet ist, wobei das Kühlfluid (11) flüssig ist, **dadurch gekennzeichnet, dass** die Wärmetauscheinheit (1) mindestens ein Ablasselement (10) in oder an der Wärmetauschfläche (12) umfasst, das so ausgelegt ist, dass es in der Lage ist, sich zu öffnen, und somit einen Strom des flüssigen Kühlfluids (11) aus der Wärmetauscheinheit (1) in das Batteriemodul (4) ermöglicht, wobei das Ablasselement (10) als eine Membran ausgestaltet ist, die im Fall eines Druckanstiegs in der Wärmetauscheinheit (1) zerreißt und sich öffnet.

2. Wärmetauscheinheit (1) nach Anspruch 1, wobei die Wärmetauscheinheit (1) das Batteriemodul (4) über eine energieaufnehmende Verformung der Kanalstruktur (3) im Fall eines Zusammenstoßes schützt.

3. Wärmetauscheinheit (1) nach Anspruch 1 oder Anspruch 2, wobei die Dehngrenze der Kanalstruktur (3) niedriger ist als die Dehngrenze des Batteriemoduls (4).

4. Wärmetauscheinheit (1) nach einem der vorhergehenden Ansprüche, wobei das Ablasselement (10) mit einem Signal geöffnet werden kann.

5. Wärmetauscheinheit (1) nach einem der vorhergehenden Ansprüche, wobei die Kanalausrichtung (13) im Wesentlichen senkrecht zur Wärmetauschfläche (12) verläuft.

6. Wärmetauscheinheit (1) nach einem der vorhergehenden Ansprüche, wobei die Kanalausrichtung (13) einen Winkel a zwischen 60 und 90 Grad in Richtung der Wärmetauschfläche (12) aufweist.

7. Wärmetauscheinheit (1) nach einem der vorhergehenden Ansprüche, wobei die Kanalstruktur (3) eine Wabenstruktur umfasst.

8. Wärmetauscheinheit (1) nach einem der vorhergehenden Ansprüche, wobei die Wärmetauscheinheit (1) Metallmontagevorrichtungen (15) zwischen der Wärmetauschfläche (12) und der Kanalstruktur (3) umfasst, die im Wesentlichen entlang der Länge der Wärmetauscheinheit (1) ausgerichtet sind.

9. Wärmetauscheinheit (1) nach einem der vorhergehenden Ansprüche, wobei das Kühlfluid (11) Zusätze umfasst, die in der Lage sind, unerwünschte chemische Reaktionen zu behindern.

10. Wärmetauscheinheit (1) nach einem der vorhergehenden Ansprüche, wobei sich das Ablasselement (10) im Fall eines Zusammenstoßes öffnet.

11. Wärmetauscheinheit (1) nach einem der vorhergehenden Ansprüche, wobei die Wärmetauscheinheit (1) zwischen zwei Batteriemodulen (4) angeordnet ist.

12. Anordnung einer Wärmetauscheinheit (1) in einem Fahrzeug (5), wie sie in einem der vorhergehenden Ansprüche beschrieben ist, wobei die Wärmetauscheinheit (1) auf der Seite des Batteriemoduls (4) angeordnet ist, auf der während eines voraussichtlichen Zusammenstoßes oder Aufpralls die meiste Energie aufgenommen wird.

13. Anordnung einer Wärmetauscheinheit (1) nach Anspruch 12, wobei die Wärmetauscheinheit (1) im Boden des Fahrzeugs (5) angeordnet ist.

## Revendications

1. Unité d'échange de chaleur (1) pour un module de batterie (4) dans un véhicule (5), l'unité d'échange de chaleur (1) étant en contact avec le module de batterie (4) sur une surface d'échange de chaleur (12), le module de batterie (4) comprenant un ou plusieurs blocs de batterie (2) avec une pluralité de cellules électrochimiques (8), l'unité d'échange de chaleur (1) comprenant une structure de canaux (3) avec une orientation de canaux (13), dans laquelle un fluide de refroidissement (11) peut passer à travers la structure de canaux (3), l'orientation de canaux (13) étant dirigée vers la surface d'échange de chaleur (12) dans au moins certaines zones de la structure de canaux (3), le fluide de refroidissement (11) étant liquide, **caractérisé en ce que** l'unité d'échange de chaleur (1) comprend au moins un élément d'orifice (10) dans ou sur la surface d'échange de chaleur (12) qui est conçu pour être capable de s'ouvrir et permet ainsi un écoulement du fluide de refroidissement liquide (11) de l'unité d'échange de chaleur (1) au module de batterie (4), l'élément d'orifice (10) étant conçu en tant que membrane qui éclate et s'ouvre en cas d'une augmentation de pression à l'intérieur de l'unité d'échange de chaleur (1).

2. Unité d'échange de chaleur (1) selon la revendication 1, l'unité d'échange de chaleur (1) protégeant le module de batterie (4) par une déformation de la structure de canaux (3) absorbant l'énergie en cas de collision.

3. Unité d'échange de chaleur (1) selon la revendication 1 ou la revendication 2, la limite d'élasticité de la structure de canaux (3) étant inférieure à la limite d'élasticité du module de batterie (4).

4. Unité d'échange de chaleur (1) selon l'une quelconque des revendications précédentes, l'élément d'orifice (10) pouvant être ouvert par un signal.

5. Unité d'échange de chaleur (1) selon l'une quelconque des revendications précédentes, l'orientation de canaux (13) étant essentiellement perpendiculaire à la surface d'échange de chaleur (12).

6. Unité d'échange de chaleur (1) selon l'une quelconque des revendications précédentes, l'orientation de canaux (13) présentant un angle a entre 60 et 90 degrés vers la surface d'échange de chaleur (12).

7. Unité d'échange de chaleur (1) selon l'une quelconque des revendications précédentes, la structure de canaux (3) comprenant une structure alvéolée.

8. Unité d'échange de chaleur (1) selon l'une quelconque des revendications précédentes, l'unité d'échange de chaleur (1) comprenant des pièces fixes métalliques (15) entre la surface d'échange de chaleur (12) et la structure de canaux (3), qui sont alignées essentiellement le long de la longueur de l'unité d'échange de chaleur (1).

9. Unité d'échange de chaleur (1) selon l'une quelconque des revendications précédentes, le fluide de refroidissement (11) comprenant des additifs capables d'empêcher des réactions chimiques non souhaitées.

10. Unité d'échange de chaleur (1) selon l'une quelconque des revendications précédentes, l'élément d'orifice (10) s'ouvrant en cas de collision.

11. Unité d'échange de chaleur (1) selon l'une quelconque des revendications précédentes, l'unité d'échange de chaleur (1) étant située entre deux modules de batterie (4).

12. Agencement d'une unité d'échange de chaleur (1) dans un véhicule (5), telle que décrite dans l'une quelconque des revendications précédentes, l'unité d'échange de chaleur (1) étant située sur le côté du module de batterie (4) sur lequel la plus grande quantité d'énergie est absorbée pendant une collision ou un impact prévus.

13. Agencement d'une unité d'échange de chaleur (1) selon la revendication 12, l'unité d'échange de chaleur (1) étant située dans le plancher du véhicule (5).
